# FASCICULE DE BREVET EUROPEEN

(11) **EP 3 752 349 B1**
(45) Date de publication et mention de la délivrance du brevet: **11.05.2022**
(21) Numéro de dépôt: 19710740.2
(22) Date de dépôt: 13.02.2019
(51) Int. Cl.: B29D 30/06

(54) **MEMBRANE DE CUISSON POUR PNEUMATIQUE ET PROCÉDÉ POUR SA FABRICATION**
AUSHÄRTEMEMBRAN FÜR EINEN REIFEN UND VERFAHREN ZU IHRER HERSTELLUNG
CURING MEMBRANE FOR A TYRE AND METHOD FOR MANUFACTURE THE SAME

(30) Priorité: 15.02.2018 FR 1851269
(43) Date de publication de la demande: 23.12.2020
(73) Titulaire: COMPAGNIE GENERALE DES ETABLISSEMENTS MICHELIN, 63000 Clermont-Ferrand (FR)
(72) Inventeur: PIALOT, Frédéric, 63040 Clermont-Ferrand Cedex 9 (FR); FAUGERAS, Alain, 63040 Clermont-Ferrand Cedex 9 (FR); MERINO LOPEZ, Jose, 63040 Clermont-Ferrand Cedex 9 (FR)
(74) Mandataire: Redouté, Gilles Pierre
(86) Numéro de dépôt international: PCT/FR2019/050309
(87) Numéro de publication internationale: WO 2019/158852

(56) Documents cités:
- EP-A1- 2 228 190
- JP-A- H06 143 288
- JP-A- 2005 280 260
- JP-A- 2014 091 272
- US-A1- 2014 205 695

## Description

La présente invention se rapporte au domaine des pneumatiques et concerne les membranes de cuisson utilisées dans les procédés de fabrication des pneumatiques.

Les pneumatiques sont habituellement obtenus par moulage et vulcanisation d'une ébauche de pneumatique à l'intérieur d'un moule de cuisson. Les parois externes de l'ébauche de pneumatique sont plaquées contre les parois internes rigides du moule de cuisson à l'aide d'une membrane de cuisson souple qui se déploie à l'intérieur de l'ébauche sous l'effet d'un fluide sous pression. Le dessin de la bande de roulement des garnitures du moule et celui des coquilles s'imprime ainsi sur l'enveloppe crue qui est vulcanisée à l'aide de la chaleur. La membrane de cuisson se déploie à l'intérieur de l'enveloppe crue avant la cuisson et elle se replie à la fin de la cuisson, elle doit résister aux sollicitions mécaniques, en température, à l'usure et elle doit pouvoir se détacher facilement du pneumatique cuit.

Une ébauche de pneumatique crue est obtenue généralement par enroulement et poses successives de divers composants à base d'élastomères, notamment des nappes, bandelettes renforcés ou pas, des tringles et leurs protections, sur un tambour de confection rotatif. Lors de la confection, l'air est emprisonné entre les différentes couches et composants de l'ébauche et ressort lorsque l'ébauche est soumise à la pression de vulcanisation. Pour ceci, le moule de vulcanisation présente des orifices d'évent pour laisser passer l'air qui sort à l'interface entre la surface externe de l'ébauche et les parties rigides du moule de cuisson. La surface interne de l'ébauche est au contact, elle, d'une membrane de cuisson souple et étanche car elle renferme le fluide caloporteur qui assure également la mise en pression et le déploiement de la membrane. Comme pour la surface externe de l'ébauche, l'air emprisonné entre la surface interne du pneumatique et la membrane de cuisson doit être évacué pour éviter l'apparition des poches d'air qui peuvent provoquer, lorsque présents, des défauts sur la surface interne du pneumatique cuit. Ces défauts sont généralement des soufflures présentes sur la surface interne du pneumatique ou même dans la structure interne du pneumatique, ce qui mène à des défauts d'aspect, à la perte de performance du pneumatique, voire même à la décohésion des couches internes du pneumatique.

Afin de permettre l'évacuation de l'air présent entre la surface interne du pneumatique et la membrane de cuisson, cette dernière est munie de rainures d'évacuation d'air. Ces rainures sont souvent réalisées sous forme des canaux hélicoïdaux disposés à des intervalles réguliers sur la surface externe de la membrane, dans la direction circonférentielle de celle-ci, entre la zone centrale définie par le plan équatorial de la membrane et les talons de fixation en presse de celle-ci. En effet, lors du déploiement de la membrane de cuisson à l'intérieur de l'ébauche, elle prend initialement appui sur une partie annulaire située au niveau du plan équatorial de l'ébauche et les stries canalisent l'air présent entre l'ébauche et la membrane vers les talons de celle-ci et il est évacué via des orifices d'évent au niveau des pièces du moule. Toutefois, pour permettre une bonne évacuation de l'air, ces rainures doivent être assez profondes. Par ailleurs, la membrane doit avoir une épaisseur la plus fine possible afin de pouvoir transmettre les calories à l'ébauche. Or, il a été constaté que de telles rainures profondes affaiblissent la membrane et réduisent sa durée de vie.

Pour pallier à ce problème, le document JP2005280259 propose une membrane de cuisson comportant des rainures circonférentielles sur sa surface externe et dont la zone comprise entre deux rainures adjacentes est divisée en plusieurs ilots hexagonaux séparés entre eux par des fines entailles. Lors du déploiement de la membrane, la présence des entailles assure une déformation assez uniforme de la membrane et réduit le risque de fissures de celle-ci, même pour des membranes ayant une épaisseur assez fine. Toutefois, la zone de contact entre l'ébauche et les ilots hexagonaux plans est assez importante et l'évacuation des poches d'air présentes au niveau des ilots ne se fait pas de manière satisfaisante.

Le document WO2010/143094 propose une solution pour remédier à ce problème, solution qui consiste à utiliser une membrane similaire à celle du document précédent en combinaison avec une ébauche de pneumatique dont la couche interne est réalisée par pose et enroulement de bandelettes étroites. L'ébauche de pneumatique participe ainsi, de par sa construction à l'évacuation de l'air emprisonné entre sa surface interne et la surface externe de la membrane de cuisson. Ayant, certes, une capacité d'évacuation d'air supérieure à celle de la membrane du document précédent, cette solution implique une construction particulière de l'ébauche de pneumatique et, par conséquent, des dispositifs de confections, des composants élastomères adaptés, etc.

D'autres membranes de cuisson pour pneumatiques sont décrites dans les demandes EP 2228190 A et JP 2014091272 A.

Un objectif de l'invention est de remédier aux inconvénients des documents précités et de proposer une solution pour améliorer la capacité d'évacuation d'air d'une membrane de cuisson, sans conséquences négative sur la durée de vie de celle-ci, afin de permettre d'améliorer la qualité de vulcanisation d'une ébauche de pneumatique, indépendamment de la méthode de fabrication de l'ébauche.

Cet objectif est atteint par l'invention qui propose une membrane de cuisson pour pneumatique ayant une forme de révolution autour d'un axe central et comportant une paroi flexible en caoutchouc réticulé dont la surface externe est destinée à venir au contact de la surface interne d'une ébauche de pneumatique lors de la cuisson, la surface externe ayant une structure en relief comportant plusieurs canaux d'évacuation d'air, caractérisée en ce que ladite structure en relief présente des premiers canaux formant gorges d'évacuation d'air agencées à une distance p2 l'une de l'autre comprise entre 2 et 5mm, et ayant une profondeur h2 comprise entre 0,4 et 1 mm, deux gorges adjacentes définissant entre elles une zone inter-gorges comportant des deuxièmes canaux formant sillons de canalisation d'air réalisées de manière à communiquer entre eux et avec au moins l'une des gorges, les sillons ayant chacun une profondeur h3 comprise entre 0,01 et 0,4mm et étant situés à une distance comprise entre 0,2 et 1mm l'un de l'autre.

Selon l'invention, on pratique ainsi sur toute la surface externe de la partie utile de la membrane des canaux d'évacuation d'air dont les dimensions sont choisies de manière à pouvoir effectuer un bon drainage de l'air. Plus particulièrement, en réalisant des sillons très fins et très rapprochés, on est certain, d'une part de pouvoir avoir toujours un canal qui canalise une bulle d'air, en tout lieu et, d'autre part, on augmente de manière significative la superficie du relief la membrane et, de ce fait le volume d'air canalisé par la membrane.

De surcroît, en faisant communiquer des nombreux sillons très fins et rapprochés avec des gorges plus profondes et plus espacées, mais moins nombreuses, on obtient une évacuation progressive du volume d'air capté au niveau des sillons. Cela permet d'avoir un volume d'air évolutif dans le temps et une évacuation facilitée de l'air drainé. Le volume d'air est donc localement (au niveau du sillon) faible, mais globalement (au niveau de la membrane) très important.

Avec la structure en relief de l'invention, on arrive à drainer l'air en tout point l'air inclus, son volume augmentant de manière évolutive dans le temps, ce qui permet d'évacuer l'air progressivement et rapidement.

De préférence, une zone inter-gorges comprend des sillons et des nervures réalisées sous forme de lignes courbes intriquées l'une dans l'autre. Ceci permet de bien repartir les sillons et les nervures sur la surface de la zone inter-gorges.

Avantageusement, la somme des superficies des sillons est supérieure à celle des nervures d'une zone inter-gorges. Ceci permet d'avoir un volume de captage important au niveau des sillons.

Dans un premier mode de réalisation, les gorges sont rectilignes et parallèles entre elles en étant agencées à une même distance p2 l'une de l'autre. De telles gorges parallèles rectilignes agencées à une distance régulière constituent des canaux de collecte de l'air en provenance de sillons situés entre deux gorges adjacentes et assurent un drainage progressif du volume d'air en provenance des sillons.

Dans un deuxième mode de réalisation, les gorges définissent une structure en nid d'abeilles, ladite structure en nid d'abeilles étant composée de plusieurs hexagones réguliers de hauteur égale à p2. Une telle structure en nid d'abeilles ou pavage hexagonal de la surface permet de bien couvrir la surface de la membrane, l'hexagone régulier ayant la plus grande surface possible pour un périmètre donné.

De préférence, la membrane comprend plusieurs rainures parallèles entre elles, agencées à une distance prédéterminée p1 l'une de l'autre, avec pl>p2, et réalisées de manière à communiquer avec au moins une gorge. Ainsi, les rainures, plus profondes et moins nombreuses que les gorges, permettent de réaliser un drainage progressif de l'air reçu en provenance des gorges.

Avantageusement, lesdites rainures s'étendent entre les deux talons de la membrane ou entre un talon et une zone avoisinant le plan équatorial de la membrane. Cela permet de canaliser l'air au niveau des talons d'où il est évacué via les évents pratiqués dans les pièces de moule en vis-à-vis.

L'invention a pour objet également un procédé de fabrication d'une membrane de cuisson par un procédé de vulcanisation dans une presse de vulcanisation comportant un noyau rigide fixe et deux coquilles rigides mobiles, dans lequel lesdites gorges et lesdits sillons sont obtenus par au moins une opération de gravure chimique sur ledit noyau.

Un autre objet de l'invention est un procédé de cuisson d'une ébauche pneumatique dans un moule de cuisson comportant des parties moulantes rigides et à l'aide d'une membrane de cuisson souple, caractérisé en ce que l'ébauche de pneumatique coopère avec une membrane selon l'invention lors de la cuisson.

L'invention sera mieux comprise grâce à la suite de la description, qui s'appuie sur les figures suivantes :
- la figure 1 est une vue en coupe axiale d'un demi-moule de cuisson de pneumatique comportant une membrane de l'invention ;
- la figure 2 est une vue en perspective d'un noyau d'un moule de vulcanisation d'une membrane de cuisson de l'invention ;
- la figure 3 une vue à échelle agrandie d'une partie de la surface externe de la membrane selon un premier mode de réalisation de l'invention;
- la figure 4 une vue à échelle agrandie d'une partie de la surface externe de la membrane selon un deuxième mode de réalisation de l'invention;
- les figures 5a et 5b sont des vues à échelle agrandie des détails B et C des figures 3 et 4 ;
- la figure 6a est une vue à échelle agrandie d'une partie de la surface d'une membrane de cuisson selon un mode préféré de réalisation de l'invention et la figure 6b est une vue en coupe réalisée avec le plan A-A' de la figure 6a.

Sur les différentes figures, les éléments identiques ou similaires portent la même référence. Leur description n'est donc pas systématiquement reprise.

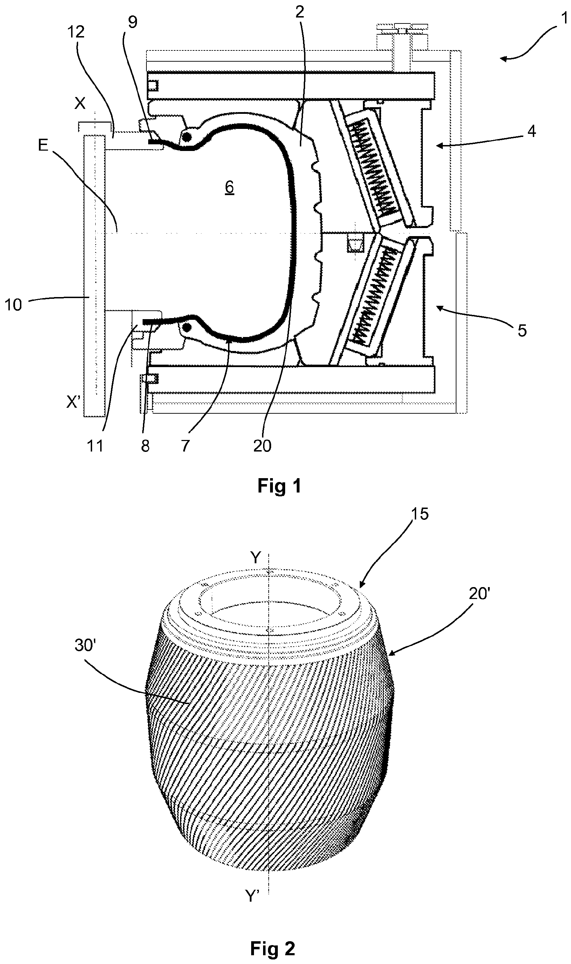

La figure 1 illustre de manière schématique la moitié d'un moule de cuisson 1 pour pneumatiques, le moule étant illustré en position fermée, celle correspondant à l'opération de cuisson d'une ébauche de pneumatique 2. Le moule illustré à la figure 1 est du type en deux parties moulantes 4 et 5 venant en contact l'une avec l'autre au niveau du plan équatorial E de l'ébauche. Les parties moulantes comprennent, de manière connue, plusieurs pièces rigides définissant, en position fermée du moule une cavité de moulage 6, ayant une forme de révolution autour de l'axe central X-X', dont les parois internes sont réalisées de manière à définir, après moulage, la surface externe du pneumatique. Les parties moulantes 4 et 5 sont animées par des actionneurs prévus à cet effet pour fermer la cavité de moulage 6 avant de démarrer la cuisson de l'ébauche de pneumatique et l'ouvrir à la fin de la cuisson afin de pouvoir extraire le pneumatique cuit. Au centre du moule 1 est disposée une tige centrale 10 qui supporte deux plateaux 11, 12 en forme de disque agencés à distance axialement l'un de l'autre et dans lesquels est fixée par ses extrémités une membrane de cuisson 7. La membrane de cuisson 7 est fixée de manière étanche par ses extrémités ou talons 8, 9 aux plateaux 11, 12, un orifice d'admission, respectivement d'évacuation, de fluide caloporteur et qui communique de manière étanche avec l'intérieur de la membrane étant prévus au niveau du plateau 11.

Dans ce qui suit, une direction axiale désigne une direction parallèle à l'axe X-X', une direction radiale désigne une direction perpendiculaire à l'axe X-X' et une direction circonférentielle est une direction perpendiculaire à la direction radiale.

La membrane de cuisson 7 est un corps creux élastique et expansible utilisé pour mouler et vulcaniser un pneumatique dans un moule de cuisson supporté, lui, au sein d'une presse de cuisson. Plus particulièrement, la membrane de cuisson 7 comprend un corps tubulaire dont la surface externe forme une partie utile 20, destinée à venir au contact de la surface interne de l'ébauche de pneumatique, partie utile délimitée par des parties d'extrémité formant talons 8, 9 de la membrane. La surface externe de la partie utile 20 de la membrane présente généralement une structure en relief, en étant par exemple munie de rainures d'évacuation de l'air inclus entre la membrane de cuisson et l'ébauche de pneumatique lors de la cuisson.

En fonctionnement, l'ébauche de pneumatique 2 est introduite dans la cavité de moulage 6 et est centrée par rapport à l'axe X-X' du moule. Lorsqu'on injecte du fluide caloporteur sous pression à l'intérieur de la membrane de cuisson 7, en général de la vapeur d'eau ou de l'air mélangé avec de l'azote, elle se déploie et prend une forme générale toroïdale à l'intérieur de l'enveloppe de pneumatique. Lorsqu'elle se déploie sous l'effet de la pression du fluide caloporteur, sa paroi flexible s'étend jusqu'à plaquer l'enveloppe crue contre les parois rigides du moule de cuisson. Lors de cette phase, la membrane doit évacuer l'air inclus dans le pneumatique lors de sa confection. La surface de la membrane présente dans ce but une structure en relief.

Pour fabriquer une membrane on utilise, de manière généralement connue, une presse de vulcanisation comportant un noyau et deux coquilles rigides, métalliques, la membrane étant constituée par le manchon obtenu par un moulage de compression d'un bloc de caoutchouc butyle inséré entre les coquilles et le noyau. Le motif de la surface externe de la partie utile de la membrane est imprimé sur le noyau qui est une pièce convexe, plus facile à usiner que les coquilles qui sont des pièces concaves. La membrane est donc vulcanisée à l'envers, la structure en relief étant située à l'intérieur de la membrane lors de sa fabrication. Après vulcanisation, on extrait la membrane et on la retourne, comme une chaussette, de manière à ramener sa structure en relief à l'extérieur de la membrane.

La figure 2 illustre un exemple de noyau 15 utilisé dans un moule de vulcanisation d'une membrane de cuisson 7 de l'invention. Le noyau 15 a une forme de révolution autour d'un axe Y-Y', axe qui coïncide avec celui de l'ébauche de pneumatique lorsque la membrane et l'ébauche sont agencées dans le moule de cuisson 1.

Le noyau 15 a une forme ovoïdale, plus particulièrement il comporte trois parties de longueur axiale sensiblement égale dont deux parties frontales en tronc de cône réunies par une partie centrale cylindrique. La surface externe 20' du noyau 15 constitue le négatif de la partie utile 20 de la membrane de cuisson 7 et comporte dans ce but des cannelures 30' uniformément réparties sur la surface externe 20' du noyau permettant la moulure de nervures correspondantes dans la membrane de cuisson 7. Lors de la fabrication de la membrane le noyau moule les nervures sur sa partie interne, la membrane est ensuite retournée pour être déposée dans le moule de cuisson. Deux nervures adjacentes de la membrane définissent entre elles une rainure 30 d'évacuation d'air, plusieurs rainures 30 étant ainsi uniformément reparties sur la surface externe de la membrane. Les cannelures 30' sont orientées de manière à ce que les rainures de la membrane canalisent l'air à partir du sommet de l'ébauche de pneumatique en direction des bourrelets de celle-ci. Les cannelures 30' sont généralement inclinées par rapport à une ligne méridienne du noyau de la membrane, mais peuvent aussi être parallèles à celle-ci. Dans l'exemple illustré à la figure 2, les cannelures 30' sont parallèles entre elles, elles forment un angle d'environ 30° avec la ligne méridienne du noyau, chaque cannelure part d'une première position circonférentielle du noyau à l'une de ses extrémités qui forme l'un des talons de la membrane et arrive dans une deuxième position circonférentielle du noyau à l'extrémité opposée. Les rainures 30 ont une profondeur hl, une largeur l1 et sont espacées d'un pas p1 sur la circonférence de la membrane.

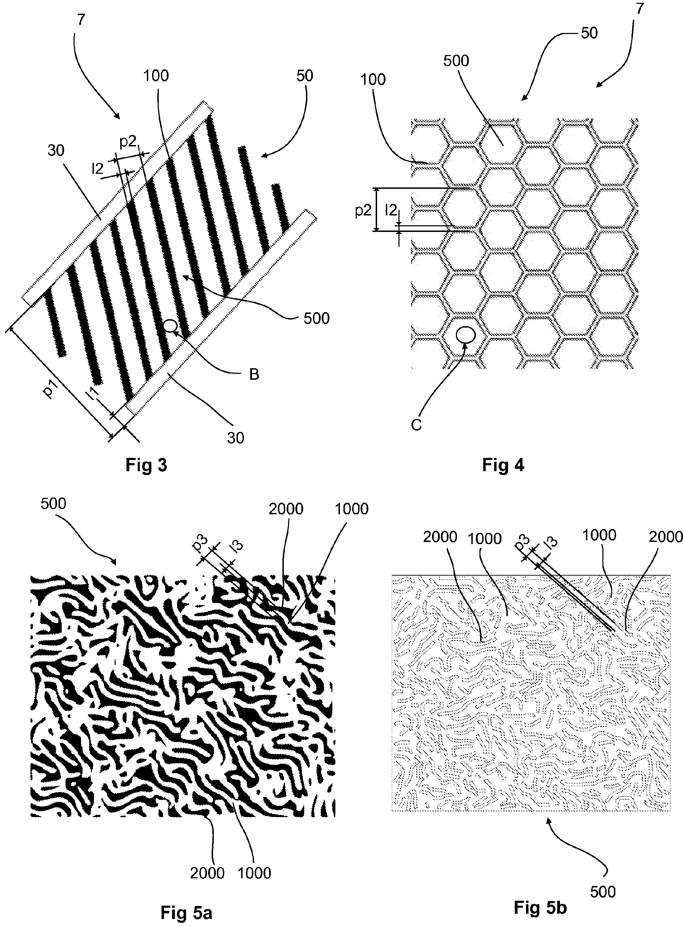

Selon l'invention, la surface externe de la partie utile 20 de la membrane de cuisson présente une structure en relief dont le motif varie avec les dimensions du relief et cela jusqu'à une échelle inférieure au millimètre. Plus particulièrement, dans un premier mode de réalisation de l'invention et tel que visible à la figure 3, la surface d'une zone inter-rainures 50 comprise entre deux rainures 30 parallèles adjacentes de la membrane est munie de gorges 100 d'évacuation d'air. Plusieurs gorges 100 sont réalisées sous forme de lignes droites parallèles entre elles et croisant les rainures 30. Les gorges 100 communiquent ainsi avec les rainures 30. Les gorges 100 ont une largeur l2, une profondeur h2 et sont espacées d'un pas p2, avec l2<l1, h2<hl et p2<p1. Dans une variante (non illustrée sur les dessins) les rainures 30 sont absentes, un réseau de gorges 100 parallèles uniformément reparties est présent sur toute la surface externe de la partie utile 20 de la membrane de cuisson 7.

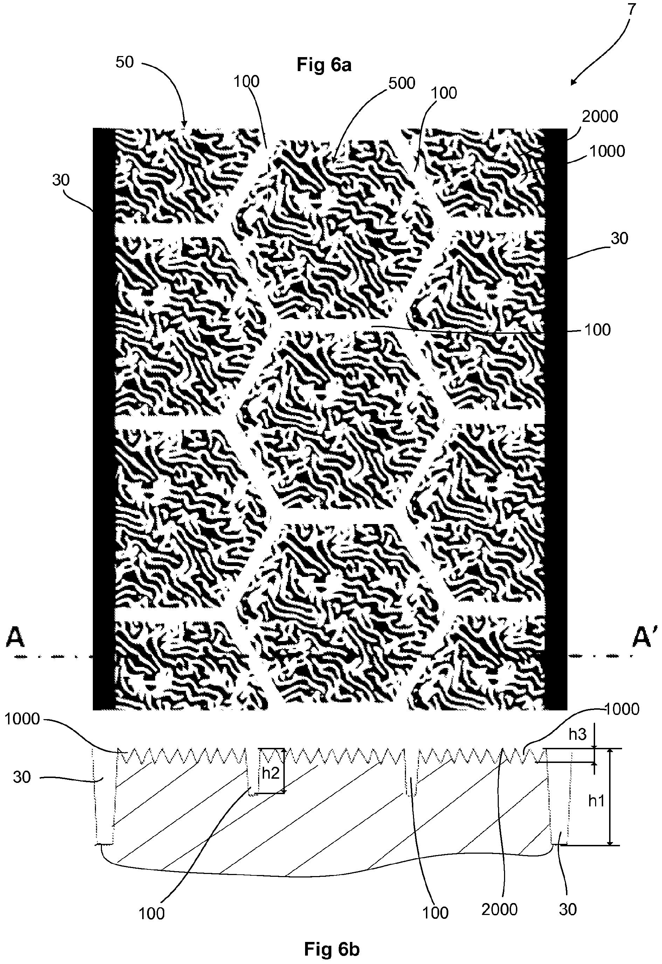

Dans un deuxième mode de réalisation illustré à la figure 4, les gorges 100 d'évacuation d'air sont réalisées sous forme d'un pavage hexagonal ou formant un réseau du type en nid d'abeilles. Les gorges 100 définissent entre elles donc des zones inter-gorges 500 en forme d'hexagone régulier. Dans une autre variante, tel que mieux visible aux figures 6a et 6b, les gorges 100 communiquent entre elles et avec des rainures 30. Dans une autre variante de réalisation de l'invention (non illustrée sur les dessins) les rainures 30 sont absentes, le réseau de gorges 100 en nid d'abeilles étant présent sur toute la surface externe de la partie utile 20 de la membrane de cuisson 7.

De surcroît, selon une caractéristique avantageuse de l'invention, et tel que mieux visible aux figures 5a et 5b, la surface d'une zone inter-gorges 500 comprise entre deux gorges adjacentes 100 est munie de sillons 1000 d'évacuation d'air communiquant entre eux et uniformément répartis sur la surface comprise entre deux gorges 100. Les sillons 1000 communiquent entre eux et aussi avec les gorges 100. Les sillons 1000 ont une largeur moyennel3, une profondeur h3 et sont espacées d'un pas moyen p3, avec 13<12, h3<h2 et p3<p2.

Les sillons 1000 sont réalisés sous forme d'un enchevêtrement de lignes courbes gravées sur la surface d'une surface inter-gorges 500. Plus particulièrement, les sillons 1000 (parties en creux) et les nervures 2000 (parties en relief) sont des lignes courbes intriquées les unes dans les autres. Les sillons 1000 communiquent entre eux soit en étant l'un dans la continuité de l'autre, soit en s'intersectant, soit lorsque des bifurcations ou des ponts sont prévus entre deux sillons adjacents. Deux exemples de réalisation de tels motifs sont illustrés aux figures 5a et 5b. Les sillons 1000 ont une largeur 13 égale ou légèrement supérieure à celle des nervures 2000, on peut ainsi définir le motif par la densité des sillons qui est supérieure à 50% et par exemple comprise en 50 et 60% par rapport à celle des stries 2000. Les paramètres dimensionnels des rainures 30 uniformément réparties sur la surface de la membrane sont : le pas p1 dont les valeurs sont comprises entre 10 et 35mm, la largeur l1 comprise entre 1 et 1,5mm et la profondeur h1 comprise entre 1 et 1,5mm.

Les paramètres dimensionnels des gorges 100 uniformément réparties sur la surface de la membrane ou sur celle d'une zone inter-rainures 50 sont : le pas p2 dont les valeurs sont comprises entre 2 et 5mm, la largeur l2 comprise entre 0,5 et à 1mm et la profondeur h2 comprise entre 0,4 et 1mm.

Les paramètres dimensionnels des sillons 1000 qui sont, eux, uniformément répartis sur la surface d'une zone inter-gorges 500, sont : le pas moyen p3 dont les valeurs sont comprises entre 0,2 et 1mm, la largeur moyenne 13 comprise entre 0,1 et 0,5mm et la profondeur h3 comprise entre 0,01 et 0,4mm. Par pas moyen et largeur moyenne on comprend les valeurs moyennes arithmétiques des distances et respectivement des largeurs des sillons 1000 d'une zone inter-gorges 500.

Ainsi, une zone inter-gorges 500 de forme hexagonale a une superficie comprise entre 3,5 et 22mm² et une zone inter-gorges 500 en forme de parallélogramme a une superficie comprise entre 15 et 157mm². La surface externe de la membrane de cuisson 7 est ainsi divisée dans des petites zones inter-gorges 500, chacune étant munie de sillons 1000 fins et peu profonds de canalisation d'air vers les gorges 100. Les gorges collectent l'air des sillons et l'évacuent vers les rainures 30 ou, lorsque celle-ci sont absentes, vers les talons de la membrane.

Dans un premier exemple du premier mode de réalisation, la structure en relief de la surface externe de la membrane de cuisson 7 comprend plusieurs gorges 100 parallèles, tel que visible à la figure 3, et des sillons 1000 du type illustré à la figure 5a étant prévus entre les gorges 100, les rainures 30 étant absentes. Pour des gorges 100 ayant un pas p2 de 4mm, une largeur l2 de 0,8mm et une profondeur de 0,3mm et des sillons un pas p3 de 0,4 mm, une largeur de 0,2mm et une profondeur de 0,1mm, la surface projetée externe calculée de la membrane augmente de 124% et le volume d'air drainé de 191% par rapport à une membrane standard (on comprend une membrane de même dimensions munie uniquement de rainures 30). Lorsque l'on rajoute, dans un deuxième exemple de réalisation de la membrane selon ce premier mode, des rainures 30 ayant un pas de 10mm, une largeur de 1,2mm et une profondeur de 0,8mm, la surface projetée externe calculée de la membrane augmente de 123% et le volume d'air drainé augmente de 403% par rapport à une membrane standard.

Dans un premier exemple du deuxième mode de réalisation, la structure en relief de la surface externe de la membrane de cuisson 7 comprend plusieurs gorges 100 en nid d'abeilles, tel que visible à la figure 4, et des sillons 1000 du type illustré à la figure 5b étant prévus entre les gorges 100, les rainures 30 étant absentes. Par une structure en nid d'abeilles sur la surface externe de la membrane, on comprend que cette surface est divisée dans des parcelles ayant chacune une forme d'hexagone régulier et dans laquelle deux séries de parcelles adjacentes en forme d'hexagone régulier se rejoignent par leur bases. Les hexagones réguliers de la structure en nid d'abeilles forment des zones inter-gorges 500 en relief qui sont séparées par des gorges 100 en creux.

Il est bien entendu possible de munir une zone inter-gorges 500 selon le premier mode de réalisation illustré à la figure 3 avec des sillons 1000 réalisés selon le motif illustré à la figure 5b et celle réalisée selon le deuxième mode illustré à la figure 4 avec des sillons 1000 qui sont réalisés selon le motif illustré à la figure 5a.

Pour des gorges 100 ayant un pas p2 de 4mm, une largeur l2 de 0,8mm et une profondeur de 0,3mm et des sillons un pas p3 de 0,4 mm, une largeur de 0,2mm et une profondeur de 0,1mm, la surface projetée externe calculée de la membrane augmente de 132% et le volume d'air drainé de 235% par rapport à une membrane standard (on comprend une membrane de même dimensions munie uniquement de rainures 30). Lorsque l'on rajoute, dans un deuxième exemple de réalisation de la membrane selon ce deuxième mode, des rainures 30 ayant un pas de 10mm, une largeur de 1,2mm et une profondeur de 0,8mm, la surface projetée externe calculée de la membrane augmente de 129% et le volume d'air drainé augmente de 436% par rapport à une membrane standard.

Les sillons 1000 et les gorges 100 sont réalisés par gravure chimique sur la surface du noyau 15, les rainures 30 étant réalisées par usinage mécanique.

Lors du gonflage de la membrane de cuisson 7 à l'intérieur de l'ébauche, elle prend initialement appui sur une partie annulaire située au niveau du plan équatorial E de l'ébauche. Plus précisément, les nervures 2000 des zones inter-gorges 500 de cette partie annulaire équatoriale prennent appui sur l'ébauche ce qui permet à l'air inclus dans les sillons 1000 d'être déversé dans le réseau de gorges 100. Lors du déploiement complet de la membrane, toute la surface externe de la membrane de cuisson 7 prend appui sur la surface interne de l'ébauche de pneumatique 2, l'air capté à échelle sous-millimétrique par les sillons 1000 de chaque zone inter-gorges 500 est canalisé vers les gorges 100 et évacué progressivement via les rainures 30, lorsqu'elles sont présentes, voire uniquement via le réseau de gorges 100, vers les talons 8,9 de la membrane de cuisson. On obtient ainsi une évacuation progressive au niveau de la membrane du volume d'air capté au niveau des sillons. Cela permet au volume d'air capté en tout point d'évoluer dans le temps en étant drainé sur toute la surface de la membrane, et d'obtenir ainsi une évacuation facilitée de l'air drainé.

Dans une variante, on recouvre la surface externe de la membrane de cuisson d'un revêtement anti-collant par exemple du type réalisé à base d'une composition de silicone qui durcit en présence d'eau ayant une épaisseur comprise entre 15 et 30µm.

D'autres variantes et modes de réalisation de l'invention peuvent être envisagés sans sortir du cadre de ses revendications.

Ainsi, on peut utiliser tout autre type de pavage de la surface de la membrane de cuisson à la place du pavage hexagonal, par exemple un pavage utilisant des triangles équilatéraux ou des carrés ou en combinant des polygones de toutes sortes, pas forcément réguliers.

## Revendications

1. Membrane de cuisson (7) pour pneumatique ayant une forme de révolution autour d'un axe central et comportant une paroi flexible en caoutchouc réticulé dont la surface externe est destinée à venir au contact de la surface interne d'une ébauche de pneumatique lors de la cuisson, la surface externe ayant une structure en relief comportant plusieurs canaux d'évacuation d'air, **caractérisée en ce que** ladite structure en relief présente des premiers canaux formant gorges (100) d'évacuation d'air agencées à une distance p2 l'une de l'autre comprise entre 2 et 5mm, et ayant une profondeur h2 comprise entre 0,4 et 1 mm, deux gorges adjacentes définissant entre elles une zone inter-gorges (500) comportant des deuxièmes canaux formant sillons (1000) de canalisation d'air réalisées de manière à communiquer entre eux et avec au moins l'une des gorges (100), les sillons ayant chacun une profondeur h3 comprise entre 0,01 et 0,4mm et étant situés à une distance comprise entre 0,2 et 1mm l'un de l'autre.

2. Membrane selon la revendication 1, **caractérisée en ce qu'**une zone inter-gorges (500) comprend des sillons (1000) et des nervures (2000) réalisées sous forme de lignes courbes intriquées l'une dans l'autre.

3. Membrane selon la revendication 2, **caractérisée en ce que** la somme des superficies des sillons (1000) est supérieure à celle des nervures (2000) d'une zone inter-gorges (500).

4. Membrane selon l'une des revendications précédentes, **caractérisée en ce que** les gorges (100) sont rectilignes et parallèles entre elles en étant agencées à une même distance p2 l'une de l'autre.

5. Membrane selon l'une des revendications 1 à 3, **caractérisée en ce que** les gorges (100) définissent une structure en nid d'abeilles, ladite structure en nid d'abeilles étant composée de plusieurs hexagones réguliers de hauteur égale à p2.

6. Membrane selon l'une des revendications précédentes, **caractérisée en ce qu'**elle comprend plusieurs rainures (30) parallèles entre elles, agencées à une distance prédéterminée p1 l'une de l'autre, avec pl>p2, et réalisées de manière à communiquer avec au moins une gorge (100).

7. Membrane selon la revendication 6, **caractérisée en ce que** lesdites rainures (30) s'étendent entre les deux talons de la membrane ou entre un talon et une zone avoisinant le plan équatorial de la membrane.

8. Procédé de fabrication d'une membrane selon l'une des revendications précédentes, par un procédé de vulcanisation dans une presse de vulcanisation comportant un noyau rigide fixe et deux coquilles rigides mobiles, dans lequel lesdites gorges (100) et lesdits sillons (1000) sont obtenus par au moins une opération de gravure chimique sur ledit noyau.

9. Procédé de cuisson d'une ébauche pneumatique dans un moule de cuisson comportant des parties moulantes (3,4) rigides et à l'aide d'une membrane de cuisson souple, **caractérisé en ce que** l'ébauche coopère avec une membrane selon l'une des revendications 1 à 7 lors de l'opération de cuisson.

## Patentansprüche

1. Aushärtungsmembran (7) für einen Reifen, die eine Rotationsform um eine zentrale Achse und eine flexible Wand aus vernetztem Kautschuk aufweist, deren Außenfläche dazu bestimmt ist, beim Aushärten mit der Innenfläche eines Reifenrohlings in Kontakt zu kommen, wobei die Außenfläche eine Reliefstruktur mit mehreren Luftauslasskanälen aufweist, **dadurch gekennzeichnet, dass** die Reliefstruktur erste Kanäle aufweist, die Luftauslassnuten (100) bilden, in einem Abstand p2 zwischen 2 und 5 mm zueinander angeordnet sind und eine Tiefe h2 zwischen 0,4 und 1 mm aufweisen, wobei zwei benachbarte Nuten zwischeneinander einen Nutzwischenbereich (500) definieren, der zweite Kanäle umfasst, die Luftkanalisierungsrillen (1000) bilden, die so ausgeführt sind, dass sie miteinander und mit mindestens einer der Nuten (100) in Verbindung stehen, wobei die Rillen jeweils eine Tiefe h3 zwischen 0,01 und 0,4 mm aufweisen und in einem Abstand zwischen 0,2 und 1 mm zueinander angeordnet sind.

2. Membran nach Anspruch 1, **dadurch gekennzeichnet, dass** ein Nutzwischenbereich (500) Rillen (1000) und Rippen (2000) umfasst, die als ineinander verschlungene gekrümmte Linien ausgeführt sind.

3. Membran nach Anspruch 2, **dadurch gekennzeichnet, dass** die Summe der Fläche der Rillen (1000) größer als die der Rippen (2000) eines Nutzwischenbereichs (500) ist.

4. Membran nach einem der vorangehenden Ansprüche, **dadurch gekennzeichnet, dass** die Nuten (100) geradlinig und parallel zueinander sind, indem sie in demselben Abstand p2 zueinander angeordnet sind.

5. Membran nach einem der Ansprüche 1 bis 3, **dadurch gekennzeichnet, dass** die Nuten (100) eine Wabenstruktur definieren, wobei die Wabenstruktur aus mehreren regelmäßigen Sechsecken zusammengesetzt ist, deren Höhe p2 entspricht.

6. Membran nach einem der vorangehenden Ansprüche, **dadurch gekennzeichnet, dass** sie mehrere zueinander parallele Kehlen (30) umfasst, die mit einem vorbestimmten Abstand p1 zueinander angeordnet sind, wobei p1 > p2, und die so ausgeführt sind, dass sie mit mindestens einer Nut (100) in Verbindung stehen.

7. Membran nach Anspruch 6, **dadurch gekennzeichnet, dass** sich die Kehlen (30) zwischen den beiden Wülsten der Membran oder zwischen einer Wulst und einem an die Äquatorialebene der Membran angrenzenden Bereich erstrecken.

8. Verfahren zur Herstellung einer Membran nach einem der vorangehenden Ansprüche durch ein Vulkanisationsverfahren in einer Vulkanisationspresse mit einem festen starren Kern und zwei beweglichen starren Schalen, wobei die Nuten (100) und die Rillen (1000) durch mindestens einen chemischen Ätzvorgang auf dem Kern erhalten werden.

9. Verfahren zum Aushärten eines Reifenrohlings in einer Aushärtungsform, mit starren Formteilen (3, 4) und mit Hilfe einer flexiblen Aushärtungsmembran, **dadurch gekennzeichnet, dass** der Rohling während des Aushärtungsvorgangs mit einer Membran nach einem der Ansprüche 1 bis 7 zusammenwirkt.

## Claims

1. Curing bladder (7) for a tyre, having a shape of revolution about a central axis and having a flexible wall made of crosslinked rubber, the external surface of which is intended to come into contact with the internal surface of a green tyre during curing, the external surface having a relief structure having a plurality of air evacuation channels, **characterized in that** said relief structure has first channels forming air evacuation grooves (100) arranged at a distance p2 of between 2 and 5 mm from one another, and having a depth h2 of between 0.4 and 1 mm, two adjacent grooves defining, between one another, an inter-groove zone (500) having second channels forming air channelling furrows (1000) made so as to communicate with one another and with at least one of the grooves (100), the furrows each having a depth h3 of between 0.01 and 0.4 mm and being situated at a distance of between 0.2 and 1 mm from one another.

2. Bladder according to Claim 1, **characterized in that** an inter-groove zone (500) comprises furrows (1000) and ribs (2000) made in the form of curved lines intermingled with one another.

3. Bladder according to Claim 2, **characterized in that** the sum of the areas of the furrows (1000) is greater than that of the ribs (2000) in an inter-groove zone (500).

4. Bladder according to one of the preceding claims, **characterized in that** the grooves (100) are rectilinear and mutually parallel, being arranged at one and the same distance p2 from one another.

5. Bladder according to one of Claims 1 to 3, **characterized in that** the grooves (100) define a honeycomb structure, said honeycomb structure being made up of a plurality of regular hexagons with a height equal to p2.

6. Bladder according to one of the preceding claims, **characterized in that** it comprises a plurality of mutually parallel slots (30) that are arranged at a predetermined distance p1 from one another, where p1>p2, and are made so as to communicate with at least one groove (100).

7. Bladder according to Claim 6, **characterized in that** said slots (30) extend between the two beads of the bladder or between a bead and a zone close to the equatorial plane of the bladder.

8. Process for manufacturing a bladder according to one of the preceding claims, using a vulcanizing process in a vulcanizing press having a fixed rigid core and two movable rigid shells, wherein said grooves (100) and said furrows (1000) are obtained by at least one chemical etching operation on said core.

9. Process for curing a green tyre in a curing mould having rigid moulding parts (3, 4) and with the aid of a flexible curing bladder, **characterized in that** the green tyre cooperates with a bladder according to one of Claims 1 to 7 during the curing operation.
